Europäisches Patentamt

European Patent Office

Office européen des brevets

(19)

(11) Veröffentlichungsnummer: **0 233 374**
A2

## (12) EUROPÄISCHE PATENTANMELDUNG

(21) Anmeldenummer: **86118178.2**

(22) Anmeldetag: **31.12.86**

(51) Int. Cl.³: **B 32 B 25/08**

(30) Priorität: **13.02.86 AT 364/86**

(43) Veröffentlichungstag der Anmeldung:
**26.08.87 Patentblatt 87/35**

(84) Benannte Vertragsstaaten:
**BE CH DE ES FR GB IT LI NL SE**

(71) Anmelder: **Semperit Aktiengesellschaft**
**Modecenterstrasse 22**
**A-1031 Wien(AT)**

(72) Erfinder: **Samhaber, Friedrich, Dr. Dipl.-Ing.**
**Schieferhub 5**
**A-4722 Peuerbach(AT)**

(74) Vertreter: **Müller, Hans-Jürgen, Dipl.-Ing. et al,**
**Müller, Schupfner & Gauger Lucile-Grahn-Strasse 38**
**Postfach 80 13 69**
**D-8000 München 80(DE)**

(54) **Verbundwerkstoff.**

(57) Die Erfindung betrifft einen Verbundwerkstoff, der insbesondere als vor Korrosion schützendes Auskleidungsmaterial verwendbar ist. Der Verbundwerkstoff besteht aus einer Schicht aus einem Fluorkunststoff, einer Trägerschicht aus einem aufvulkanisierbaren Elastomer und einer vulkanisierbaren Zwischenschicht.

EP 0 233 374 A2

Croydon Printing Company Ltd.

0233374

Verbundwerkstoff

Die Erfindung betrifft einen Verbundwerkstoff, insbesondere
als Auskleidungsmaterial für Korrosionsschutz, mit einer Schicht
aus einem Fluorkunststoff.

Weiters betrifft die Erfindung ein Verfahren zur Herstellung
des erfindungsgemäßen Verbundwerkstoffes.

Die hervorragende Chemikalienbeständigkeit und beachtliche
Temperaturbeständigkeit lassen Fluorkunststoffe, insbesondere
fluorhältige Thermoelaste, wie PTFE (Polytetrafluorethylen),
oder fluorhältige Thermoplaste, wie PVDF (Polyvinylidenfluorid), FEP (Perfluorethylenpropylen) und Perfluoralkoxy-
Copolymere (PFA), als Auskleidungsmaterialien für korrosionsgefährdete Anlagenteile und Apparate geradezu prädestiniert
erscheinen. Leider erschweren einige charakteristische
physikalische Eigenschaften dieser Fluorkunststoffe gerade
diesen Einsatz als Auskleidungsmaterial in besonderer Weise.
Das extrem ausgeprägte antiadhäsive Verhalten und die gute
Lösungsmittelbeständigkeit erschweren die Haftung an dem
auszukleidenden Grundmaterial und machen eine unmittelbare
Verklebung unmöglich. Die mangelnde Schweißbarkeit von PTFE,
bedingt durch die extrem hohe Schmelzviskosität von $10^{10}$ Pa sec
schließt dieses Material von vielen Konfektionierungsarten aus. Die Steifheit von PVDF und PFA in größeren, oft
aus Gründen der Diffusionsbeständigkeit erforderlichen,
Schichtdicken macht diese Materialien für viele Anwendungszwecke ungeeignet. Die gegenüber Stahl stark unterschiedliche
thermische Ausdehnung schafft bei temperaturbeanspruchten
ausgekleideten Werkstücken zusätzliche Probleme.

Nach dem Stand der Technik werden z.B. Auskleidungen aus
PTFE als lose Jacke gefertigt und die Stoßstellen mit PFA-
Folien schmelzverklebt. Diese Art der Auskleidung hat jedoch

- 2 -

die Nachteile, daß sie nicht vakuumfest ist und sich nicht für jede Apparateform eignet.

Auskleidungen mit Fluorkunststoffen mit Hilfe von Klebern sind nur möglich, wenn die Oberfläche der Fluorkunststoffe vorbehandelt wird. Zur Vorbehandlung wird in die Oberfläche beispielsweise Fasergewebe als Haftvermittler eingeschmolzen oder die Oberfläche chemisch aktiviert bzw. geätzt. Dazu eignen sich besonders Lösungen von Natrium in flüssigem Ammoniak oder Lösungen von Naphthylnatrium in Tetrahydrofuran. Derart vorbehandelte Fluorkunststoffe werden dann üblicherweise mit lösungsmittelfreien Zweikomponentenklebern verklebt. Jedoch auch diese Art der Verklebung hat für den Einsatz bei einer Korrosionsschutz-Auskleidung eine Reihe von Nachteilen. So haben die dafür angewandten Kleber keine oder sehr beschränkte Eigenklebewirkung. Das Auskleidungsmaterial muß daher während des gesamten - bis zu 6 Stunden dauernden - Aushärtungsvorganges gleichmäßig an das auszukleidende Werkstück angepreßt werden. Eine - besonders bei thermisch beanspruchten Teilen wichtige - absolut blasenfreie Aufbringung des Klebers stößt auf Schwierigkeiten. Schließlich ist der Kleber entscheidend weniger temperaturbeständig als das Auskleidungsmaterial. Während der Kleber nicht über 130° C - meist kaum über 120° C - beständig ist, lassen sich Auskleidungsmaterialien aus PVDF bis 140° C, jene aus FEP bis 205° C und jene aus PFA sogar bis 260° C beanspruchen. Diese große Differenz zwischen der thermischen Beständigkeit von Kleber und Auskleidungsmaterial - die im Falle PFA etwa 160° C betragen kann - ist ein besonders gravierender Nachteil, der häufig nur einen Bruchteil der so wertvollen

thermischen Beständigkeit von Fluorkunststoffen auszunützen gestattet.

Um den Nachteil der mangelnden Eigenklebewirkung von lösungsmittelfreien Zweikomponentenklebern zu umgehen, werden auch Fluorkunststoffolien hergestellt, welche als Haftbrücke eine ausvulkanisierte Weichgummibeschichtung aufweisen, welche mit Kontaktklebern direkt auf das auszukleidende Werkstück aufgebracht werden kann. Die Art der Klebung wird dadurch zwar erheblich vereinfacht, der Nachteil der mangelnden Temperaturbeständigkeit des Klebers dagegen noch vergrößert, da diese Art der Verklebung nur bis etwa 80° C beständig ist und daher in der Temperaturbeständigkeit wieder weit unter jener des Fluorkunststoffes liegt. Weiters ist bei diesem Auskleidungsmaterial mit Haftbrücke die Fluorkunststoffschicht, etwa im Falle von PVDF, aus produktionstechnischen Gründen nicht dicker als 1,2 mm zu fertigen. Bei dieser geringen Schichtdicke ist die Diffusionsbeständigkeit und damit Resistenz gegenüber verschiedenen Chemikalien, wie z.B. Chlorkohlenwasserstoffen, nicht gegeben, wodurch sich der Einsatzbereich wieder einengt.

Die Erfindung hat sich nun die Aufgabe gestellt, einen Verbundwerkstoff der eingangs genannten Art zu schaffen, bei dem die genannten Nachteile weitgehend beseitigt sind, bei dem also insbesondere die Vorteile der Verwendung von Fluorkunststoffen, vor allem deren Beständigkeit gegen hohe Temperaturen, voll ausgenützt werden können.

Gelöst wird die gestellte Aufgabe erfindungsgemäß dadurch, daß der Verbundwerkstoff eine aufvulkanisierbare, aus einem Elastomer bestehende Trägerschicht und zwischen dieser und dem Fluorkunststoff eine vulkanisierbare Zwischenschicht aufweist.

Der erfindungsgemäße Werkstoff ist somit geeignet, mittels eines Vulkanisationsprozesses, auch bei Temperaturen zwischen 130° und 140° C auf ein Werkstück aufgebracht zu werden. Mit dem erfindungsgemäßen Verbundwerkstoff steht daher ein Auskleidungsmaterial zur Verfügung, dessen Temperaturbeständigkeit derjenigen der Korrosionsschutzschicht, dem Fluorkunststoff, gleichkommen oder diese sogar übertreffen kann. Eine derartige Temperaturresistenz kann mit keiner Klebung auch nur annähernd erreicht werden. Mit dem erfindungsgemäßen Verbundwerkstoff steht aber auch ein Auskleidungsmaterial zur Verfügung, welches sich in der gleichen oder ähnlichen Weise konfektionieren läßt, wie klassische Auskleidungsfolien zur einfachen Weich- oder Hartgummiauskleidung, aber dabei, bedingt durch die Fluorkunststoffschicht, den Vorteil einer entscheidend höheren Chemikalienresistenz aufweist. Der Verbundwerkstoff ist daher als besonders korrosionsbeständiges Auskleidungsmaterial für Apparate und Anlagen aus Stahl, um diesen in einem sehr weiten Temperaturbereich Resistenz gegen praktisch alle Chemikalien zu verleihen, geeignet. Das Aufbringen durch Vulkanisation hat weiters auch noch den Vorteil, daß gegenüber einem Klebeverfahren eine wesentlich innigere Verbindung herstellbar ist, wobei insbesondere auch die Zwischenschicht beim Aufvulkanisieren ihre endgültige Festigkeit und Haftung erhält, die Haftung wesentlich dauerhafter ist und auch die Verarbeitung beispielsweise gegenüber Zweikomponentenklebern wesentlich unproblematischer ist. Vorteilhaft wirkt sich auch die Dicke der Elastomerschichten zwischen Werkstück und Korrosionsschutzfolie aus, die größer ist als die Dicke einer Klebeschicht, wodurch thermische Spannungen leichter ausgeglichen werden und weiters die Möglichkeit besteht, die Ausgangsmaterialien auf die thermischen Ausdehnungsunterschiede
von Werkstück und Elastomerschichten abzustimmen.

Bei einer bevorzugten Ausführungsform der Erfindung wird
als Elastomer für die Trägerschicht und als Material für
die vulkanisierbare Zwischenschicht jeweils eine unvulkanisierte Kautschukmischung, beispielsweise auf der Basis von
Naturkautschuk, verwendet. Der solcher Art aufgebaute Werkstoff ist vorerst unvulkanisiert, nach dem Aufvulkanisieren
auf den Werkstoff, beispielsweise Stahl, liegt die fertige
Auskleidung vor, die sich, beispielsweise im Falle der Verwendung von Naturkautschuk, etwa bis 140° C thermisch beanspruchen läßt.

Bei einer weiteren Ausführungsform der Erfindung wird als
Elastomer für die Trägerschicht ein ausvulkanisierter Silikonkautschuk und als vulkanisierbare Zwischenschicht ein
vulkanisierbarer Silikonkautschuk verwendet. Bei Anwendung
des Verbundwerkstoffes zur Herstellung einer Auskleidung
wird der Verbundwerkstoff auf das Werkstück aufvulkanisiert,
wobei die Zwischenschicht ihre endgültige Festigkeit erhält.
Die fertige Auskleidung läßt sich je nach verwendetem
Fluorkunststoff thermisch sehr hoch beanspruchen und ist
gegenüber praktisch allen Stoffen resistent.

Bei dieser Ausführungsvariante ist es vorteilhaft, wenn
erfindungsgemäß der Silikonkautschuk für die Zwischenschicht
ein additionsvernetzender Zweikomponenten-Silikonkautschuk
ist. Ein derartiger, während des Vulkanisationsprozesses
keinerlei flüchtige Stoffe abspaltender Silikonkautschuk verhindert ein Poröswerden der Zwischenschicht.

Hinsichtlich der Verwendung von Fluorkunststoffen sind kaum Grenzen gesetzt. So kann gemäß einer Ausführungsform der Erfindung ein fluorhältiger Thermoelast, beispielsweise Polytetrafluorethylen verwendet werden. Bei einer weiteren Ausgestaltung der Erfindung können auch fluorhältige Thermoplaste, wie Perfluorethylenpropylen, Perfluoralkoxy-Copolymere, Ethylentetrafluorethylen, Polyvinylidenfluorid, Polyvinylfluorid, Polychlortrifluorethylen, Ethylenchlor-trifluorethylen-Copolimerisat eingesetzt werden.

Das erfindungsgemäße Verfahren zur Herstellung des Verbundwerkstoffes besteht darin, daß die in bekannter Weise chemisch aktivierte oder gewebekaschierte Oberfläche des Fluorkunststoffes mit einem vulkanisierbaren Elastomer beschichtet wird und mit der gleichermaßen beschichteten Seite der Trägerschicht zusammen kalandriert oder gepreßt wird.

Wie schon aus obigen Ausführungen hervor geht, erfolgt also die Herstellung des Verbundwerkstoffes unabhängig vom Auskleidungsvorgang. Die Zwischenschicht wird erfindungsgemäß während des Herstellens des Verbundwerkstoffes gebildet, indem die mit dem vulkanisierbaren Elastomer beschichtete Seite des Fluorkunststoffes und die gleichermaßen beschichtete Seite der Trägerschichte zusammen kalandriert werden.

Gemäß einem weiteren Merkmal der Erfindung erfolgt das Aufbringen der Schicht des vulkanisierbaren Elastomers durch Aufstreichen einer Lösung des unvulkanisierten Elastomers in einem Lösemittel, beispielsweise Benzin, welches anschließend ablüftet.

0233374

Findet als Elastomer für den Verbundwerkstoff ein Silikonkautschuk Verwendung, so ist es nach einem weiteren Merkmal
der Erfindung vorteilhaft, wenn die in bekannter Weise
chemisch aktivierte oder glasgewebekaschierte Oberfläche
des Fluorkunststoffes mit einer Silikongrundierung gestrichen, nach dem Ablüften des Lösemittels mit dem vulkanisierbaren Silikonkautschuk beschichtet und mit der mit Silikongrundierung bestrichenen, abgelüfteten Trägerschicht aus
Silikonkautschuk zusammen kalandriert oder gepreßt wird.
Die Silikongrundierung wirkt sich auf das Haftvermögen der
einzelnen Schichten aneinander sehr günstig aus. Bei einem
derart hergestellten Verbundwerkstoff erreichen die Trägerschicht und die Zwischenschicht die Temperaturbeständigkeit der Korrosionsschutzschicht oder übertreffen diese
noch. Wird beispielsweise PFA als Korrosionsschutzschicht
eingesetzt, so erreicht man eine Temperaturbelastbarkeit
bis 260°C.

Als günstig hat es sich erwiesen, wenn nach einem weiteren
Merkmal der Erfindung durch Erwärmen des Verbundwerkstoffes
die Zwischenschicht aus Silikonkautschuk ausvulkanisiert
wird.

Der erfindungsgemäße Verbundwerkstoff bzw. dessen Herstellungsverfahren wird nun anhand einiger Ausführungsbeispiele näher erläutert:

Beispiel 1:

Eine glasgewebekaschierte Folie aus Perfluorethylenpropylen mit einer FEP-Stärke von 1,5 mm wird auf der
gewebekaschierten Seite mit Benzin entfettet und vor dem
restlosen Abdunsten des Benzins mit einer Lösung von

3,22  kg  Naturkautschuk

4,50  kg  Zinkweiß

0,64  kg  Eisenoxydrot

0,64  kg  Schwefel

0,10  kg  Di-2-benzothiazyldisulfid

18,20 kg  Benzin (Siedeintervall 80/110$^{\circ}$ C)

bestrichen. Nach dem Ablüften des Lösemittels wird ein zweiter Anstrich mit derselben Lösung aufgebracht und 24 Stunden bei Raumtemperatur trocknen gelassen. Parallel dazu wird eine 4 mm starke unvulkanisierte Auskleidungsfolie auf Naturkautschukbasis, etwa der Type 8017 der Firma Schaumstoff und Kunststoff Gesellschaft m.b.H., Linz, in gleicher Weise mit der oben angegebenen Lösung bestrichen. Nach dem Ablüften des Lösemittels werden die beiden Folien mit den bestrichenen Seiten aufeinandergefügt und durch den Walzenspalt eines Walzenpaares laufen gelassen. Die Umfangsgeschwindigkeit beider Walzen ist gleich groß.

Der fertige unvulkanisierte Verbundwerkstoff läßt sich mit der Kautschukseite nach Einstreichen mit vorgenannter Lösung bei 140$^{\circ}$ C und einer Vulkanisationsdauer von 4 Stunden auf Stahl aufvulkanisieren. Die fertige Auskleidung läßt sich bis 140$^{\circ}$ C thermisch beanspruchen.


Beispiel 2:


Eine einseitig mit Natrium in flüssigem Ammoniak chemisch aktivierte Folie aus Perfluorethylenpropylen (beispielsweise Type 9000 C der Firma Pampus, Willich) von 2,3 mm Stärke wird in gleicher Weise wie im Beispiel 1 beschrieben, behandelt und auf eine Folie auf Naturkautschukbasis wie im Vorbeispiel aufkalandriert.

Der fertige Verbundwerkstoff läßt sich, wie im Beispiel 1 angegeben, auf Stahl aufvulkanisieren. Die fertige Auskleidung läßt sich bei 140$^{\circ}$ C thermisch beanspruchen.

- 9 -

0233374

## Beispiel 3:

Eine 2,3 mm starke glasgewebekaschierte Folie aus einem Perfluoralkoxy-Copolymeren (PFA) wird mit einer Silikongrundierung aus reaktionsfähigen Silanen bzw. Silikonharzen, beispielsweise Type G 790 der Firma Wacker Chemie, München, eingestrichen und Ablüften gelassen. Analog wird eine 4 mm starke Silikonkautschukfolie mit derselben Grundierung behandelt. Anschließend wird die grundierte Seite beider Folien mit flüssigem Silikonkautschuk bestrichen, aneinandergefügt und gewalzt. Verwendet wird z.B. der Zweikomponenten-Silikonkautschuk ME 622 der Firma Wacker Chemie. Durch mehrstündiges Erwärmen auf $80^{\circ} - 90^{\circ}$ C vulkanisiert die Silikonkautschukzwischenschicht aus, wodurch der Verbundwerkstoff gebrauchsfertig wird.

Um mit diesem Verbundwerkstoff eine Auskleidung durchzuführen, wird dessen Silikonkautschukseite und die zu schützende Stahlfläche vorerst mit der Silikongrundierung eingestrichen und nach dem restlosen Ablüften des Lösemittels mit dem flüssigen Silikonkautschuk nachgestrichen. Der so vorbehandelte Verbundwerkstoff wird auf die vorbehandelte Stahlfläche gepreßt und bei $120^{\circ}$ C ausvulkanisiert. An den Stoßstellen der einzelnen Auskleidungselemente wird die PFA-Folie durch Schweißen verbunden. Die fertige Auskleidung läßt sich thermisch bis ca. $260^{\circ}$ C beanspruchen und ist chemisch gegenüber praktisch allen Stoffen, mit Ausnahme von geschmolzenen und gelösten Alkalimetallen, Chlortrifluorid, Perfluorkerosin, Sauerstofftrifluorid und gasförmigem Fluor, resistent.

Beispiel 4:

Es wird, wie im Beispiel 3 angegeben, gearbeitet, jedoch anstelle der glasgewebekaschierten PFA-Folie eine chemisch mit Hilfe von Natrium in flüssigem Ammoniak aktivierte PFA-Folie eingesetzt. Die thermische und chemische Resistenz des fertigen Verbundwerkstoffes und der damit hergestellten Auskleidungen entsprechen den Angaben in Beispiel 3.

Patentansprüche:

1. Verbundwerkstoff, insbesondere als Auskleidungsmaterial für Korrosionsschutz, mit einer Schicht aus einem Fluorkunststoff, dadurch gekennzeichnet, daß der Verbundwerkstoff eine aufvulkanisierbare, aus einem Elastomer bestehende Trägerschicht und zwischen dieser und dem Fluorkunststoff eine vulkanisierbare Zwischenschicht aufweist.

2. Verbundwerkstoff nach Anspruch 1, dadurch gekennzeichnet, daß die Trägerschicht und die vulkanisierbare Zwischenschicht aus einer unvulkanisierten Kautschukmischung, beispielsweise auf der Basis von Naturkautschuk, bestehen.

3. Verbundwerkstoff nach Anspruch 1, dadurch gekennzeichnet, daß die Trägerschicht aus einem ausvulkanisierten Silikonkautschuk und die vulkanisierbare Zwischenschicht aus vulkanisierbarem Silikonkautschuk besteht.

4. Verbundwerkstoff nach Anspruch 3, dadurch gekennzeichnet, daß der Silikonkautschuk für die Zwischenschicht ein additionsvernetzender Zweikomponenten-Silikonkautschuk ist.

5. Verbundwerkstoff nach einem der Ansprüche 1 bis 4, dadurch gekennzeichnet, daß der Fluorkunststoff ein fluorhältiger Thermoelast, beispielsweise Polytetrafluorethylen ist.

6. Verbundwerkstoff nach einem der Ansprüche 1 bis 4, dadurch gekennzeichnet, daß der Fluorkunststoff ein fluorhältiger Thermoplast, wie Perfluorethylenpropylen,

0233374

Perfluoralkoxy-Copolymere, Ethylentetrafluorethylen,
Polyvinylidenfluorid, Polyvinylfluorid, Polychlortrifluorethylen, Ethylenchlortrifluorethylen-Copolymerisat,
ist.

7. Verfahren zur Herstellung des Verbundwerkstoffes
   nach einem der Ansprüche 1 bis 6, dadurch gekennzeichnet, daß die in bekannter Weise chemisch aktivierte
   oder gewebekaschierte Oberfläche des Fluorkunststoffes
   mit einem vulkanisierbaren Elastomer beschichtet wird
   und mit der gleichermaßen beschichteten Seite der Trägerschicht zusammen kalandriert oder gepreßt wird.

8. Verfahren nach Anspruch 7, dadurch gekennzeichnet, daß
   die Schichten des vulkanisierbaren Elastomers durch
   Aufstreichen einer Lösung des unvulkanisierten Elastomers
   in einem Lösemittel, beispielsweise Benzin, aufgebracht
   werden, wobei anschließend ein Ablüften des Lösemittels
   erfolgt.

9. Verfahren nach Anspruch 7 oder 8, dadurch gekennzeichnet,
   daß die in bekannter Weise chemisch aktivierte oder
   glasgewebekaschierte Oberfläche des Fluorkunststoffes
   mit einer Silikongrundierung gestrichen, nach dem Ablüften des Lösemittels mit dem vulkanisierbaren Silikonkautschuk beschichtet und mit der mit Silikongrundierung
   bestrichenen, abgelüfteten Trägerschicht aus Silikonkautschuk zusammen kalandriert oder gepreßt wird.

10. Verfahren nach Anspruch 9, dadurch gekennzeichnet, daß
    anschließend durch Erwärmen des Verbundwerkstoffes die
    Zwischenschicht aus Silikonkautschuk ausvulkanisiert wird.